# EUROPÄISCHE PATENTSCHRIFT

(11) **EP 1 521 799 B1**
(45) Veröffentlichungstag und Bekanntmachung des Hinweises auf die Patenterteilung: **10.04.2019**
(21) Anmeldenummer: 03762546.4
(22) Anmeldetag: 30.06.2003
(51) Int. Cl.: C08J 9/20, C08J 9/00

(54) **OFFENZELLIGE POLYPROPYLEN-PARTIKELSCHÄUME**
OPEN-CELL POLYPROPYLENE PARTICLE FOAMS
MOUSSES A PARTICULES DE POLYPROPYLENE A CELLULES OUVERTES

(30) Priorität: 05.07.2002 DE 10230583
(43) Veröffentlichungstag der Anmeldung: 13.04.2005
(73) Patentinhaber: BASF SE, 67056 Ludwigshafen am Rhein (DE)
(72) Erfinder: MALETZKO, Christian, 67122 Altrip (DE); DIETZEN, Franz-Josef, 67454 Hassloch (DE); KEPPELER, Uwe, 67126 Hochdorf-Assenheim (DE); BRAUN, Frank, 67063 Ludwigshafen (DE); HAHN, Klaus, 67281 Kirchheim (DE); DE GRAVE, Isidor, 67157 Wachenheim (DE)
(74) Vertreter: BASF IP Association
(86) Internationale Anmeldenummer: PCT/EP2003/006895
(87) Internationale Veröffentlichungsnummer: WO 2004/005383

(56) Entgegenhaltungen:
- EP-B- 0 831 115
- DE-A- 19 950 420
- DE-A1- 19 921 386
- US-A- 6 077 875

## Beschreibung

Die Erfindung betrifft ein Verfahren zur Herstellung von offenzelligen Schaumstoffpartikeln auf Basis von Propylenpolymerisaten.

Schaumstoffteile aus Propylenpolymerisaten werden in steigendem Maße für Automobilinnenteile, als Verpackungsmaterialien und für Freizeitartikel eingesetzt. Man erhält sie durch Nachexpandieren und Versintern von entsprechenden Schaumstoffpartikeln. Diese wiederum werden nach bekannten Verfahren (z.B. EP-A 95109) hergestellt durch Imprägnieren von Polypropylengranulat in wässriger Suspension in einem Druckbehälter mit einem flüchtigen Treibmittel und anschließendem entspannen. Derart hergestellte Schaumstoffpartikel zeigen im DSC-Thermodiagamm einen sogenannten Doppelpeak, d.h. mindestens einen Hochtemperaturpeak bei einer höheren Temperatur als dem Schmelzepeak des eingesetzten Propylenpolymerisats (siehe z.B. EP-A 415744). Sie zeichnen sich durch eine besonders gute Verarbeitbarkeit und gute mechanische Eigenschaften, z.B. Wärmestandfestigkeit aus. Normalerweise sind derartige Schaumstoffpartikel geschlossenzellig; z.B weisen die Schaumstoffpartikel nach EP-A 95109 mindestens 65 % geschlossene Zellen auf. Dies ist in den meisten Anwendungsfällen auch erwünscht.

In der EP-A 1016690 sind Schaumstoffpartikel aus Propylenpolymerisaten beschrieben, die Wasser als Treibmittel sowie 0,05 bis 10 Gew.% eines hydrophilen Polymeren, z.B. ein Polyamid, einen Polyester oder Polyvinylalkohol enthalten. Sie enthalten aber mindestens 85 % geschlossene Zellen, sind also nicht offenzellig.

Offenzellige Kunststoffschaumstoffe sind im allgemeinen elastischer als geschlossenzellige und sie haben eine schalldämpfende Wirkung, was z.B. für Automobilinnenverkleidungen und bei manchen Verpackungsmaterialien von Vorteil ist. In WO 00/15700 sind offenzellige Polyolefinschaumstoffe mit guten schallabsorbierenden Eigenschaften beschrieben. Es handelt sich dabei um Platten, Folien oder Rohre, die durch Extrusion einer Polyolefinschmelze zusammen mit einem flüchtigen organischen Treibmittel hergestellt werden. Bei dieser Schaumextrusion können nur Formteile mit einfacher Geometrie hergestellt werden; außerdem zeigen die Schaumstoffe nicht den oben beschriebenen Doppelpeak im DSC-Thermodiagramm, so dass z.B. ihre Wärmestandfestigkeit für manche Einsatzzwecke unzureichend ist.

Die DE 199 21 386 A1 offenbart Partikelschaumstoffe mit einer Offenzelligkeit von mehr als 80% auf Basis von Styrolpolymerisaten, wobei die Thermoplastmatrix A) 99 bis 50 Gew.-% eines Styrolpolymerisates und B) 1bis 50 Gew.-% eines mit dem Styrolpolymerisat wenig verträglichen Polymeren enthält. Im Falle von Polypropylen als Polymer B) ist die bevorzugte Menge 3 bis 10 Gew.-%. Hierbei wird zunächst aus einem Blend aus Polystyrol und Polypropylen durch Imprägnierung in wässriger Suspension treibmittelhaltige expandierbare Granulate hergestellt, die anschließend in einem Vorschäumer zu offenzelligen Schaumstoffpartikeln expandiert werden.

Der Erfindung lag nun die Aufgabe zugrunde, ein Verfahren zur Herstellung von offenzelligen Schaumstoffpartikeln auf Basis von Propylenpolymerisaten bereitzustellen, die insbesondere gute mechanische Eigenschaften und eine vielseitige Weiterverarbeitbarkeit zeigen.

Gegenstand der Erfindung ist dementsprechend ein Verfahren zur Herstellung offenzelliger Schaumstoffpartikel mit einer mittleren Partikelgröße von 1 bis 10 mm und einer Schüttdichte von 5 bis 200 g/1 auf Basis von Propylenpolymerisaten mit einer Offenzelligkeit (nach DIN-10 ISO 4590) von mehr als 40 % durch Imprägnieren von Propylenpolymerisat-Partikeln in Suspension in einem Druckbehälter bei einer Imprägniertemperatur zwischen 120 und 160°C mit einem flüchtigen Treibmittel und anschließendem Entspannen, wobei die Propylenpolymerisat-Partikel 1 bis 40 Gew.% eines Zellöffners enthalten.

Derartige offenzellige Schaumstoffpartikel werden nach einem bevorzugten Verfahren hergestellt durch Imprägnieren von Propylenpolymerisat-Partikeln in wässriger Suspension in einem Druckbehälter bei erhöhter Temperatur mit einem flüchtigen Treibmittel und anschließendem Entspannen. Die Propylenpolymerisat-Partikel enthalten 1 bis 40 Gew.% eines Zellöffners, z.B. einen polaren wasserunlöslichen Thermoplasten, ein wasserlösliches Polymeres oder einen nadelförmigen anorganischen Feststoff.

Propylenpolymerisate im Sinne der Erfindung sind:
a. Homopolypropylen,
b. Randomcopolymer des Propylens mit bis zu 15 Gew.% Ethylen und/oder Buten-1, vorzugsweise ein Copolymer von Propylen mit 0,5 bis 6 Gew.% Ethylen oder mit 0,5 bis 12 Gew.% Buten-1 oder ein Terpolymer aus Propylen, 0,5 bis 6 Gew.% Ethylen und 0,5 bis 6 gew.% Buten-1,
c. Mischungen von a. oder b. mit 0,1 bis 75, vorzugsweise 3 bis 50 Gew.% eines Polyolefin-Elastomeren, z.B. eines Ethylen/ Propylen-Blockcopolymeren.

Geeignet sind sowohl mit Ziegler- als auch mit Metallocen-Katalysatoren hergestellte Propylenpolymerisate.

Der Kristallitschmelzpunkt (DSC-Peak-Maximum der Propylenpolymerisate liegt zwischen 120 und 170 °C. Ihre Schmelzwärme, bestimmt nach der DSC-Methode, liegt vorzugsweise zwischen 50 und 110 J/g, der Schmelzindex MFI (230 °C, 2,16 kp) nach DIN 53735 zwischen 2 und 25 g/10 min.

Zur Herstellung der offenzelligen Schaumstoffpartikel geht man aus von Granulat, welches vorzugsweise mittlere Durchmesser von 0,2 bis 10, insbesondere von 0,5 bis 5 mm hat. Dieses meist zylinderförmige oder runde Minigranulat wird hergestellt durch Extrudieren des Propylenpolymerisats zusammen mit dem zuzumischenden Zellöffner und weiteren Zusatzstoffen, Auspressen aus dem Extruder, gegebenenfalls Abkühlen und Granulieren.

Wesentlich ist, dass das Minigranulat 1 bis 40 Gew.%, vorzugsweise 5 bis 35 Gew.% eines Zellöffners enthält. Bevorzugte Zellöffner sind polare, wasserunlösliche Thermoplasten, vorzugsweise ein Polyamid (PA) oder Polyoxymethylen (POM); wasserlösliche Polymere, vorzugsweise Polyvinylpyrrolidon (PVP), Polyvinylacetat und Polyethylenoxid; ferner nadelförmige anorganische Feststoffe, vorzugsweise Schnittglas mit einer Länge von 0,25 bis 5 mn. Darü erhinaus kann das Minigranulat übliche Zusatzstoffe, wie Antioxidantien, Stabilisatoren, Flammschutzmittel, Wachse, Pigmente, Farbstoffe und insbesondere Nucleierungsmittel, wie Talkum, Graphitpulver, pyrogene Kieselsäuren, Zeolithe, Bentonite und Polyolefinwachse enthalten.

Das Minigranulat wird einem Rührreaktor in einem Suspensionsmedium dispergiert. bevorzugtes Suspensionsmedium ist Wasser. In diesem Fall müssen Suspensionshilfsmittel zugesetzt werden, um eine gleichmäßige Verteilung des Minigranulats im Suspensionsmittel zu gewährleisten. Geeignete Suspensionshilfsmittel sind wasserunlösliche anorganische Stabilisatoren, wie Tricalciumphosphat, Magnesiumpyrophosphat und Calciumcarbonat; ferner Polyvinylalkohol und Tenside, wie Arylsulfonate und Fettalkoholoxylate. Sie werden in Mengen von 0,05 bis 5 Gew.%, bezogen auf das Minigranulat, eingesetzt. Der Suspension wird ein flüchtiges Treibmittel in Mengen von 2 bis 50 Gew.%, vorzugsweise 5 bis 30 Gew.%, bezogen auf das Minigranulat, zugesetzt. Die Treibmittelzugabe kann dabei vor, während oder nach dem Aufheizen des Reaktorinhalts erfolgen. geeignete Treibmittel sind organische Verbindungen mit einem Siedepunkt zwischen -5 und 150 °C, beispielsweise Alkane, Ketone und Ether, sowie anorganische Gase, wie Stickstoff und Kohlendioxid. Besonders bevorzugt sind C4- bis C₆-Kohlenwasserstoffe.

Beim Imprägnieren sollte die Temperatur in der Nähe der Erweichungstemperatur des Propylenpolymerisats liegen. Sie kann 40 °C unter bis bis 15 °C über der Schmelztemperatur (Kristallitschmelzpunkt) liegen. Erfindungsgemäß liegen die Imprägniertemperaturen zwischen 120 °C und 160 °C. Je nach Art und Menge des Treibmittels sowie nach der Höhe der Temperatur stellt sich im Reaktor ein Druck ein, der im allgemeinen höher als 2 bar ist und 40bar nicht übersteigt. Die Imprägnierzeiten liegen
im allgemeinen zwischen 0,5 und 10 Stunden, wonach der Reaktor schnell entspannt wird. Dabei blähen die mit Treibmittel imprägnierten Propylenpolymerisat-Partikel auf. Bedingt durch den Zellöffner entstehen dabei die offenzelligen Schaumstoffpartikel. Nachdem Entspannen und Ablassen aus dem Reaktor werden die Schaumstoff- partikel von Suspensionsmedium abgetrennt und gewaschen. Falls
ein wasserlöslicher Zellöffner eingesetzt wurde, wird dieser weitgehend mit ausgewaschen. Im Falle wasserunlöslicher Zellöffner bleiben diese im Schaumstoffpartikel enthalten.

Die offenzelligen Schaumstoffpartikel haben besonders gute mechanische Eigenschaften, wenn sie imDSC-Schmelzdiagramm mindestens einen Hochtemperaturpeak bei einer höheren temperatur als dem Schmelzpeak des eingesetzten Propylenpolymerisats aufweisen. Die Mittlere Partikelgröße der Schaumstoffpartikel beträgt 1 bis 10 mm, vorzugsweise 2 bis 8 mm; ihre Schüttdichte kann zwischen 5 und 200 g/1, vorzugsweise zwischen 10 und 100 g/1 liegen. Sie sind gekennzeichnet durch eine Offenzelligkeit (nach DIN-ISO 4590) von mehr als 40 %, vorzugsweise mehr als 50 % und insbesondere mehr als 75 %. Im Idealfall sind praktisch alle Zellen geöffnet, d.h. das Schaumgerüst besteht nur aus Zellstegen. Der mittlere Zelldurchmesser beträgt vorzugsweise 0,01 bis 0,5 mm, insbesondere 0,05 bis 0,3 mm.

Aus den Schaumstoffpartikeln können nachbe- kannten Verfahren durch Nachexpandieren und Versintern Schaumstoff-Formteile hergestellt werden.

Die in den Beispielen genannten Teile (TL) beziehen sich auf das Gewicht.

### Beispiele

Nachstehend bedeutet TL Gewichtsanteile.

### Einsatzstoffe:

- PPl:: Novolen 3200 MC; Polypropylen der Basell GmbH
- POMl:: Ultraform N 2320 (BASF AG)
- PAl:: Ultramid B 3 (BASF AG)
- PSl:: Standart-Polystyrol mit Mw =195.000 g/Mol, MVR =10 cm³/10 min (BASF AG)
- VPl:: Polyvinylpyrrolidon, Kollidon K 30 der BASF AG
- Glas:: Schnittglas 3786
- Wachsl:: Luwax AF 31; Polyethyl·en (Mn 3000) der BASF AG
- Talkum:: HP 325
- s-Pentan:: techn. Pentanisomerengemisch
- n/i-Butan:: techn. Butanisomerengemisch
- Antiblockl:: CaC03;
- Antiblock2:: Triscalciumphosphat
- Tensid1:: Fettalkoholoxylat
- Tensid2:: Arylsulfonat

### Herstellung der Granulate:

Zur Herstellung der Granulate wurden die Einsatzstoffe gemischt, dem Extruder zugeführt und zu einem Minigranulat verarbeitet (d: 0,8 - 1,2 mm; I:1,8 - 3 mm).

| | |
|---|---|
| Granulat1 (G1): | 100 Tl PP1, 20 Tl POM1, 1 Tl Talkum, 0,5 Tl Wachs1 |
| Granulat2 (G2): | 100 Tl PP1, 34 Tl POM1, 2,8 Tl Talkum, 0,5 Tl Wachs1 |
| Granulat3 (G3): | 100 Tl PP1, 25 Tl Glas, 0,5 Tl Wachs1 |
| Granulat4 (G4): | 100 Tl PP1, 20 Tl PA1, 1 Tl Talkum, 0,5 Tl Wachs1 |
| Granulat5 (G5): | 100 Tl PP1, 25 Tl PVP1, 1,25 Tl Talkum, 0,6 Tl Wachs1 |
| Granulat6 (G6): | 100 Tl PP1, 20 Tl Talkum, 0,5 Tl Wachs1 |
| Granulat7 (G7): | 100 Tl PP1, 20 Tl PS1, 1 Tl Talkum, 0,5 Tl Wachs1 |

### Verschäumen der Granulate

In der Tabelle sind die erreichten Schüttdichten sowie die an diesen Schaumpartikeln gemessenen Anteile offener Zellen angegeben. Die Bestimmung der Offenzelligkeit erfolgte an den Schaumpartikeln in Anlehnung an DIN-ISO 4590.

### Beispiele 1 bis 4

In einem druckfesten Rührbehälter wurden jeweils 100 Tl Granulat, 6,7 Tl Antiblock1, 0,13 Tl Tensid1, 230 Tl Wasser und die in der Tabelle angegebene Menge n/i-butan zugegeben. Dann wurde der Behälter in ca. 55 min auf die in der Tabelle genannte Imprägniertemperatur (IMT) gebracht und das Granulat bei Erreichen dieser Temperatur, durch Entspannen des Inhalts auf Umgebungsdruck, verschäumt.

### Beispiele 5 bis 10

In einem druckfesten Rührbehälter wurden auf jeweils 100 Tl Granulat, 8,75 Tl Antiblock2, 0,33 Tl Tensid2, 234 Tl Wasser und die in der Tabelle angegebene Menge n/i-Butan zugegeben. Dann wurde der Behälter in ca. 55 min auf die in der Tabelle genannte Imprägniertemperatur (IMT) gebracht und das Granulat bei Erreichen dieser Temperatur, durch entspannen des Inhalts auf Umgebungsdruck, verschäumt.

**Tabelle**

| | Beispiel 1 | Beispiel 2 | Beispiel 3 | Beispiel 4 | Beispiel 5 | Beispiel 6 | Beispiel 7 | Beispiel 8 | Beispiel 9 | Beispiel 10 |
|---|---|---|---|---|---|---|---|---|---|---|
| Granulat | G1 | G1 | G1 | G1 | G2 | G3 | G4 | G5 | G6 | G7 |
| IMT [°C] | 129.0 | 129,0 | 128,7 | 127,6 | 128,0 | 127,5 | 130,0 | 129,0 | 130,0 | 136,0 |
| Treibmittel [TL] | 24 | 20 | 20 | 20 | 24 | 24 | 35 | 24 | 35 | 16 |
| Schüttdichte [g/l] | 18 | 31 | 30 | 37 | 15 | 11 | 14 | 9 | 15 | 13 |
| Offene Zellen [%] | 43 | 42 | 51 | 65 | 80 | 59 | 79 | 65 | 10 | 9 |

| | | | | | | | | | | |
|---|---|---|---|---|---|---|---|---|---|---|
| [TL] = Gewichtsteile pro 100 Teile PP-Minigranulat | | | | | | | | | | |

Die Beispiele 9 und 10 sind Vergleichsbeispiele

## Patentansprüche

1. Verfahren zur Herstellung offenzelliger Schaumstoffpartikel mit einer mittleren Partikelgröße von 1 bis 10 mm und einer Schüttdichte von 5 bis 200 g/l und einer Offenzelligkeit (nach DIN-ISO 4590) von mehr als 40 % durch Imprägnieren von Propylenpolymerisat-Partikeln in Suspension in einem Druckbehälter bei einer Imprägniertemperatur zwischen 120 und 160°C mit einem flüchtigen Treibmittel und anschließendem Entspannen, **dadurch gekennzeichnet, dass** die Propylenpolymerisat-Partikel 1 bis 40 Gew.% eines Zellöffners enthalten.

2. Verfahren nach Anspruch 1, **dadurch gekennzeichnet, dass** das Propylenpolymerisat ein Homopolymerisat oder ein Copolymerisat des Propylens mit bis zu 15 Gew.% Ethylen und/oder Buten-1 ist.

3. Verfahren nach Anspruch 1, **dadurch gekennzeichnet dass** Propylenpolymerisat-Partikel einen Gehalt von 5 bis 35 Gew.% des Zellöffners enthalten.

4. Verfahren nach Anspruch 1, **dadurch gekennzeichnet, dass** das Treibmittel eine organische Verbindung mit einem Siedepunkt zwischen -5 und 150°C, vorzugsweise ein C₄- bis C₆-Kohlenwasserstoff, oder ein anorganisches Gas ist.

5. Verfahren nach Anspruch 1, **dadurch gekennzeichnet, dass** der Zellöffner ein polarer, wasserunlöslicher Thermoplast, vorzugsweise ein Polyamid oder Polyoxymethylen ist.

6. Verfahren nach Anspruch 1, **dadurch gekennzeichnet, dass** der Zellöffner ein nadelförmiger anorganischer Feststoff, vorzugsweise Schnittglas mit einer Länge von 0,25 bis 5 mm ist.

7. Verfahren nach Anspruch 1, **dadurch gekennzeichnet, dass** der Zellöffner ein wasserlösliche Polymeres, vorzugsweise Polyvinylpyrrolidon, Polyvinylacetat oder Polyethylenoxid ist.

## Claims

1. A process for the production of open-celled foam beads having a mean bead diameter of from 1 to 10 mm and a bulk density of from 5 to 200 g/l and a proportion of open cells (in accordance with DIN ISO 4590) of greater than 40% by impregnating propylene polymer beads in suspension with a volatile blowing agent in a pressure container at an impregnation temperature between 120 and 160°C and subsequently decompressing the mixture, wherein the propylene polymer beads comprise from 1 to 40% by weight of a cell opener.

2. The process according to claim 1, wherein the propylene polymer is a homopolymer or copolymer of propylene with up to 15% by weight of ethylene and/or 1-butene.

3. The process according to claim 1, wherein the propylene polymer beads have a content of from 5 to 35% by weight of the cell opener.

4. The process according to claim 1, wherein the blowing agent is an organic compound having a boiling point of between -5 and 150°C, preferably a C₄- to C₆-hydrocarbon, or an inorganic gas.

5. The process according to claim 1, wherein the cell opener is a polar, water-insoluble thermoplastic, preferably a polyamide or polyoxymethylene.

6. The process according to claim 1, wherein the cell opener is a needle-shaped inorganic solid, preferably cut glass having a length of from 0.25 to 5 mm.

7. The process according to claim 1, wherein the cell opener is a water-soluble polymer, preferably polyvinylpyrrolidone, polyvinyl acetate or polyethylene oxide.

## Revendications

1. Procédé de fabrication de particules de mousse à cellules ouvertes ayant une taille de particule moyenne de 1 à 10 mm et une densité apparente de 5 à 200 g/l et une ouverture cellulaire (selon DIN ISO 4590) de plus de 40 % par imprégnation de particules d'un polymère de propylène en suspension dans un contenant sous pression à une température d'imprégnation comprise entre 120 et 160 °C avec un agent gonflant volatil, puis détente, **caractérisé en ce que** les particules d'un polymère de propylène contiennent 1 à 40 % en poids d'un agent d'ouverture cellulaire.

2. Procédé selon la revendication 1, **caractérisé en ce que** le polymère de propylène est un homopolymère ou un copolymère de propylène contenant jusqu'à 15 % en poids d'éthylène et/ou de butène-1.

3. Procédé selon la revendication 1, **caractérisé en ce que** les particules d'un polymère de propylène contiennent une teneur de 5 à 35 % en poids de l'agent d'ouverture cellulaire.

4. Procédé selon la revendication 1, **caractérisé en ce que** l'agent gonflant est un composé organique ayant un point d'ébullition compris entre -5 et 150 °C, de préférence un hydrocarbure en C₄ à C₆, ou un gaz inorganique.

5. Procédé selon la revendication 1, **caractérisé en ce que** l'agent d'ouverture cellulaire est un thermoplastique polaire insoluble dans l'eau, de préférence un polyamide ou un polyoxyméthylène.

6. Procédé selon la revendication 1, **caractérisé en ce que** l'agent d'ouverture cellulaire est un solide inorganique aciculaire, de préférence du verre découpé d'une longueur de 0,25 à 5 mm.

7. Procédé selon la revendication 1, **caractérisé en ce que** l'agent d'ouverture cellulaire est un polymère soluble dans l'eau, de préférence la polyvinylpyrrolidone, le polyacétate de vinyle ou le polyoxyde d'éthylène.
